# EUROPEAN PATENT APPLICATION

(11) **EP 0 872 987 A2**
(43) Date of publication of application: **21.10.1998**
(21) Application number: 98105893.6
(22) Date of filing: 31.03.1998
(51) Int. Cl.: H04L 29/06, G06F 17/30

(54) **Apparatus for providing information, method of providing information and computer-readable storage medium retaining a program for providing information**

(30) Priority: 04.04.1997 JP 87067/97; 04.04.1997 JP 102465/97; 04.04.1997 JP 102466/97; 04.04.1997 JP 87066/97
(71) Applicant: SONY CORPORATION, Tokyo (JP)
(72) Inventor: Seki, Yosuke, Shinagawa-ku, Tokyo (JP)
(74) Representative: Melzer, Wolfgang, Dipl.-Ing.

(57) **Abstract**

When making a request for providing information from a VOD server 11, a client uses a WWW browser 27 for accessing an HTML document including a control code for controlling the VOD server 11. If an HTML document distributed from a WWW server 21 includes the control code, the client sends a request for controlling the VOD server 11 to the WWW server 21 via a network 18 (which may include the Internet). The control request is sent from the WWW server 21 to a server interface 23. The server interface 23 gives an instruction to a server controller 22 for controlling the VOD server 11. Output data of the VOD server 11 (e.g. AV data) is supplied to the client through a wide bandwidth transmission line 19 different from the network 18.

## Description

### Background of the Invention

### Technical Field Pertinent to the Invention

The present invention relates to an apparatus for providing specific information on demand and a method thereof and a computer-readable storage medium retaining a program for providing information.

### Prior Art

A video on demand (VOD) system has been commercialized for distributing video data and audio data and so on from a server on a client's demand for obtaining a movie, a program, etc. In a conventional VOD system a client's side terminal unit uses dedicated software for communications with a server. The dedicated software provides a user interface, using a programming language such as the C language, which responds to demands of a client input at a client's side terminal unit. Furthermore the dedicated software is designed to conform to sections for communicating with server control software.

The VOD system may be used by various clients including a museum, a showroom, a small theater and a shop. It is therefore required to provide a client's side terminal unit with a user interface specifically designed for each user. Each user interface may dynamically change with time and seasons or with an exhibition at a museum and so on.

However, customization of each user interface is not easily achieved for responding to each customer's demands in the method using the dedicated software in the client's side terminal unit for communications with the server. It is therefore difficult for the conventional VOD system to deal with frequent changes of a user interface and to support various clients with different specifications.

Another problem of the VOD system for use by various clients is the difficulty in creating a renewed user interface conforming to the client's demands. That is, for introducing the VOD system, it is required to newly create a means for communications between a client's side terminal unit and a server in a physical form as well as in a form of software. On the server's side, server control software dedicated to the VOD system is required for controlling the server. On the other hand, it is required for the client's side terminal unit to communicate with the server control software on the server's side through client software operating on the terminal unit for requesting the server control software for reproducing image data or audio data and so on.

Although a VOD system has been described so far, the foregoing problems apply to any system for providing information on a client's demand.

It is an object of the invention to provide an apparatus for providing information and a method thereof and a computer-readable storage medium retaining a program for providing information, each for easily creating and customizing a user interface conforming to client's demands.

### SUMMARY OF THE INVENTION

An apparatus of the invention for providing information comprises a means for receiving a demand for providing information from a client through a network, using a world wide web as a system for providing a link to information on an Internet, and a means for sending information to the client through a transmission line different from the network in response to the demand for providing information from the client received by the means for receiving a demand.

A method of the invention for providing information comprises the steps of receiving a demand for providing information from a client through a network, using the world wide web as a system for providing a link to information on the Internet, and sending information to the client through a transmission line different from the network in response to the received demand for providing information from the client.

A computer-readable storage medium according to the invention stores a program for providing information which allows a computer to implement a function of receiving a demand for providing information from a client through a network, using the world wide web as a system for providing a link to information on the Internet, and a function of sending information to the client through a transmission line different from the network in response to the demand for providing information from the client received by the function of receiving a demand.

### BRIEF DESCRIPTION OF THE DRAWINGS

Fig. 1 is a block diagram illustrating a main part of a VOD system including an information providing apparatus of an embodiment of the invention.

Fig. 2 is a block diagram illustrating an overall configuration of the VOD system of the embodiment of the invention.

Fig. 3 is a block diagram illustrating an example of a computer used as a server computer and a client computer in Fig. 1.

Fig. 4 is a block diagram illustrating an example of a VOD server in Fig. 1.

Fig. 5 is a table for showing an example of a relationship table stored in the server computer in Fig. 1.

Fig. 6 is a chart for illustrating an operation of the VOD system of the embodiment of the invention.

Fig. 7 illustrates a relationship between a frame outputted from the client computer and a frame shown on a display.

Fig. 8 illustrates the VOD system of the embodiment connected to an external Internet.

Fig. 9 illustrates the client computer of the embodiment connected to a plurality of server computers for VOD server control.

Fig. 10 illustrates an example of a CATV system.

Fig. 11 is a block diagram illustrating a modification of the VOD server of the embodiment of the invention.

Fig. 12 illustrates an application of the invention to an auto-changer system using disk players.

Fig. 13 illustrates an application of the invention to an auto-changer system using video cassette recorders.

### Detailed Description of Certain Preferred Embodiments

A preferred embodiment of the invention will now be described in detail with reference to the accompanying drawings.

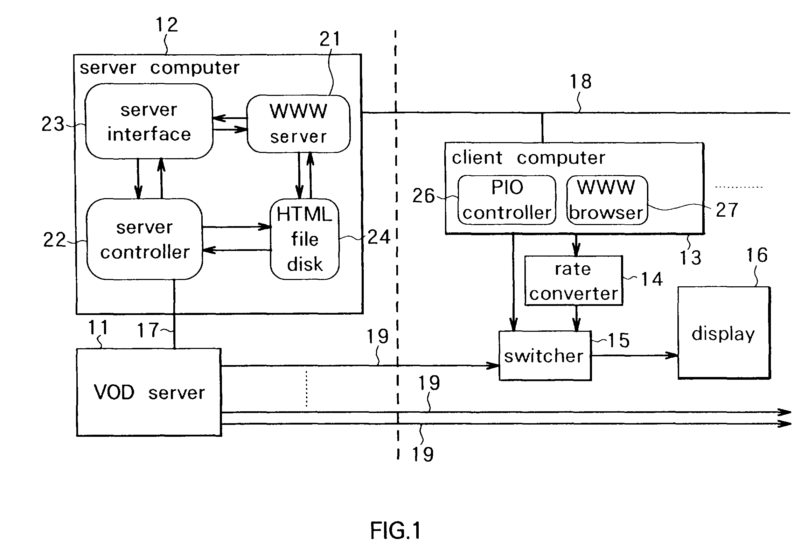

Fig. 1 is a block diagram illustrating a main part of a VOD system including an apparatus for providing information of an embodiment of the invention. The VOD system is a system for providing specific video information and audio information through a plurality of channels on demands of a plurality of clients for providing information. The VOD system comprises: a VOD server 11 for storing information to be provided for clients and sending out a specific piece of information in response to instructions; a server computer 12 for controlling the VOD server 11; a client computer 13 for sending a request for providing information to the server computer 12; a rate converter 14 for converting video signals outputted from the client computer 13 into video signals for display on a display 16; a switcher 15 for switching between video signals sent from the VOD server 11 via a high bandwidth, independent link 19 and video signals outputted from the rate converter 14 for output to the display 16 for displaying a video image. The apparatus for providing information of the embodiment is made up of the VOD server 11 and the server computer 12.

The VOD server 11 has output channels for a plurality of video data and audio data (referred to as AV data in the following description). The VOD server 11 and the server computer 12 are connected to each other through a serial transmission line 17 utilizing a serial interface such as an RS232C. The server computer 12 and the client computer 13 are connected to each other through a network 18, such as an Internet, using an Ethernet, for example. Although the one client computer 13 is shown in Fig. 1, a plurality of client computers 13 each receiving information from the VOD server 11 are connectable to the network 18 and a separate channel or link 19. Each switcher 15 corresponding to one of the client computers 13 is connected to one of the plurality of output channels of the VOD server 11 through the separate transmission line 19.

In the embodiment the VOD server 11 and the server computer 12 are called a server's side. The client computer 13, the rate converter 14, the switcher 15 and the display 16 are called a client's side.

The server computer 12 comprises: a world wide web (WWW) server 21 for management and distribution and so on of information carried on the Internet using a WWW as a system for allowing a link to information on the Internet; a server controller 22 for controlling the VOD server 11 by giving a command to the VOD server 11 through the serial transmission line 17; a server interface 23 for interfacing between the WWW server 21 and the server controller 22; and a hypertext markup language (HTML) file disk 24 for storing an HTML document written in the HTML as a hypertext language. The HTML file disk 24 is accessible from either the WWW server 21 or the server controller 22. The WWW server 21, the server controller 22 and the server interface 23 are each implemented by reloadable software (programs). The HTML file disk 24 is implemented by a hard disk in the server computer 12.

The server computer 12 shown in Fig. 1 corresponds to a means for receiving a demand (a function of receiving a demand), a means for generating information indicating sending (a function of generating information indicating sending) and a means for sending a program (a function of sending a program). The VOD server 11 corresponds to a means for sending information (a function for sending information).

The server computer 12 uses Windows NT® (a registered trademark of Microsoft Corporation), for example, for an operating system. The WWW server 21 is implemented through installing software such as Microsoft-Internet information server (IIS™, a trademark of Microsoft Corporation). The server interface 23 is, for example, implemented by software designed in compliance with an Internet server application programming interface (ISAPI) as additional software for providing extensions for the WWW server implemented by the IIS.

The client computer 13 comprises: a parallel input/output (PIO) controller 26 for controlling parallel inputs and outputs and a WWW browser 27 for accessing a WWW server on the Internet using the WWW. A suitable browser might be the commercially available Internet Explorer™ (a trademark of Microsoft Corporation) or Netscape Navigator® (a registered trademark of Netscape Communications Corporation). The PIO controller 26 and the WWW browser 27 are each implemented by software (a program). The PIO controller 26 has a function of controlling the switcher 15 at commands from the WWW server 21.

HTML documents are stored on the HTML file disk 24 in the server computer 12. The HTML documents include control codes for implementing a user interface using the WWW browser 27. The control codes included in the HTML documents include control codes for controlling the VOD server 11. The WWW browser 27 sends a request via the network 18 for controlling the VOD server 11 to the WWW server 21 when a control code for controlling the VOD server 11 is included in an HTML document distributed via the network 18 from the WWW server 21. The control request is sent from the WWW server 21 to the server interface 23. The server interface 23 gives an instruction to the server controller 22 for executing control at the control request. On receiving the instruction, the server controller 22 gives a command to the VOD server 11 through the serial transmission line 17 to control the VOD server 11.

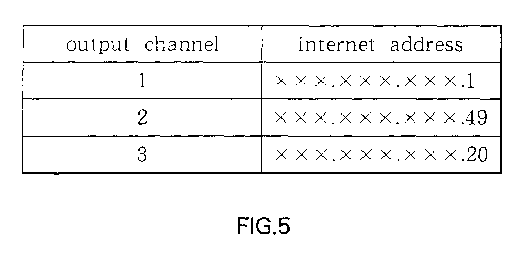

The server controller 22 has data of a table indicating a relationship between the output channels and Internet addresses (IP addresses), that is, addresses on the network 18 of the plurality of client computers 13. Fig. 5 shows an example of such a relationship table. The relationship table is made by an administrator of the VOD system. When the client computer 13 makes a request for providing information, the server controller 22 refers to the relationship table to determine the output channel corresponding to the Internet address of the client computer 13 that made the request. The server controller 22 then controls the VOD server 11 so that the requested information is sent through the corresponding separate link 19 to the client computer 13 that made the request for providing the information.

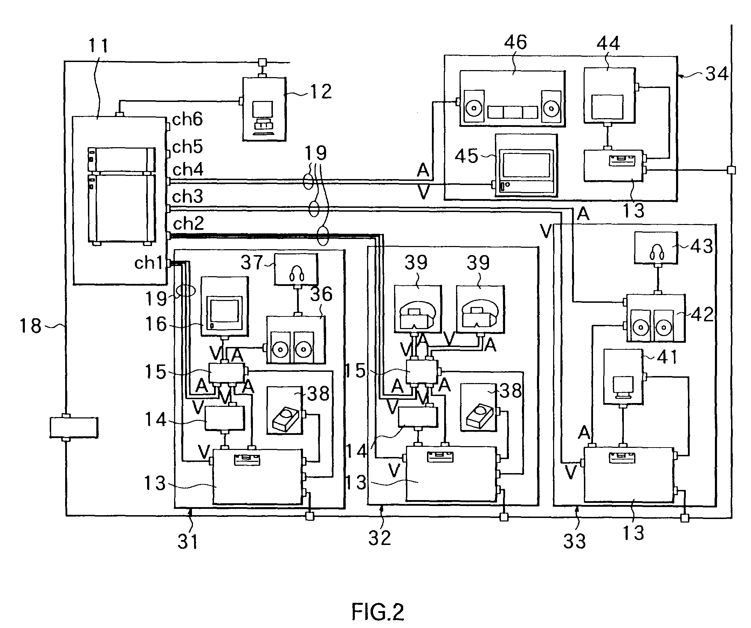

Fig. 2 is a block diagram illustrating an overall configuration of the VOD system of the embodiment. The VOD system shown comprises: the server computer 12 connected to the network 18; the VOD server 11 whose operation is controlled by the server computer 12; and four terminal units 31 to 34 of the client's side each connected to the network 18. In this example the VOD server 11 has six output channels ch1 to ch6 for AV data. The terminal units 31 to 34 receive AV data from the respective output channels ch1 to ch4 of the VOD server 11 via the separate links 19. In Fig. 2 V and A each represent video data and audio data, respectively.

The terminal unit 31 has a configuration similar to that of the client's side in Fig. 1. The terminal unit 31 comprises: a client computer 13 connected to the network 18; a rate converter 14 for converting video signals outputted from the client computer 13 into video signals for display on a display 16; a switcher 15 for switching between video signals sent from the VOD server 11 and video signals outputted from the rate converter 14 for output; and a display 16 for receiving video signals outputted from the switcher 15 and displaying a video image. Besides switching video signals, the switcher 15 in this example further has a function of switching between audio signals sent from the VOD server 11 and audio signals outputted from the client computer 13. The terminal unit 31 further comprises active speakers 36 and headphones 37 for receiving audio signals outputted from the switcher 15 for audio output; and a trackball 38 connected to the client computer 13. In the example the client computer 13 has a function of receiving video signals from an external source for manipulation. Video signals sent from the VOD server 11 are inputted to the client computer 13 as well.

The terminal unit 32 comprises two head-mount displays 39 instead of the display 16, the active speakers 36 and the headphones 37 in the terminal unit 31. The head-mount displays 39 each incorporate speakers and receive video and audio signals outputted from the switcher 15 for image display and audio output.

The terminal unit 33 comprises: a client computer 13 connected to the network 18; a touch monitor 41 for displaying video signals outputted from the client computer 13 and for functioning as a touch panel used for giving instructions to the client computer 13; active speakers 42 and headphones 43 for receiving audio signals outputted from the VOD server 11 and audio signals outputted from the client computer 13 for audio output. The client computer 13 in the terminal unit 33 has a function of receiving video signals from an external source for manipulation. Video signals sent from the VOD server 11 are inputted to the client computer 13 as well. The client computer 13 further has a function for overlaying an image made of video signals sent from the VOD server 11 on a frame created by the client computer 13 on the touch monitor 41. Another function of the client computer 13 is controlling the overlay display at commands from the WWW server 21.

The terminal unit 34 comprises: a client computer 13 connected to the network 18; a touch panel 44 for displaying video signals outputted from the client computer 13 and for giving instructions to the client computer 13; a display 45 for receiving video signals sent from the VOD server 11 for video image display; and an audio system 46 for receiving audio signals outputted from the VOD server 11 for audio output.

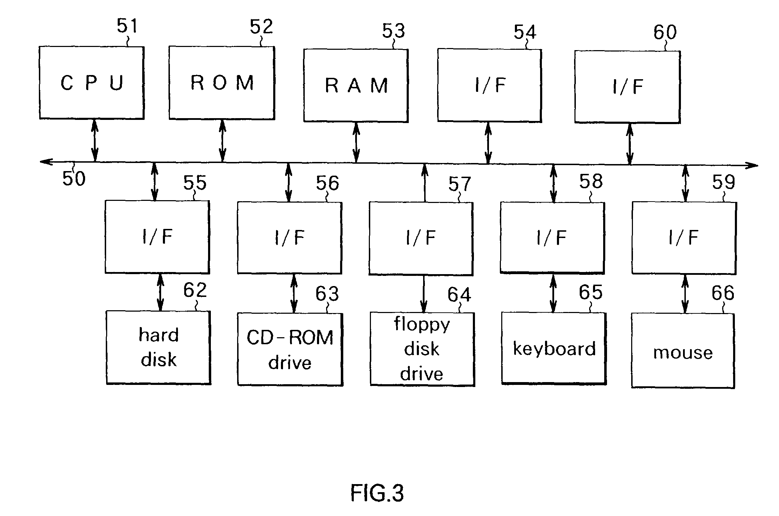

Fig. 3 is a block diagram illustrating an example of a computer used as the server computer 12 and the client computer 13 in Fig. 1. The computer comprises: a central processing unit (CPU) 51; read only memory (ROM) 52; random access memory (RAM) 53; an interface (shown as in I/F in the Figure) 54 for a display; an interface 60 for connection with the network 18; and a bus 50 for connecting the constituents. The computer further comprises: a hard disk 62; a CD-ROM drive 63; a floppy disk drive 64; a keyboard 65; and a mouse 66, each connected to the bus 50 through separate interfaces 55 to 59, respectively.

In the computer shown in Fig. 3, the CPU 51 executes an application program stored in any of the hard disk 62, a CD-ROM driven by the CD-ROM drive 63 and a floppy disk driven by the floppy disk drive 64, with the RAM 53 as a work area. In the server computer 12, a program for implementing the WWW server 21, the server controller 22 and the server interface 23 corresponds to a program for sending information of the embodiment. Consequently, a CD-ROM or a floppy disk corresponds to a computer-readable storage medium retaining a program for sending information when a program for implementing the WWW server 21, the server controller 22 and the server interface 23 in the server computer 12 is stored on either the CD-ROM driven by the CD-ROM drive 63 or the floppy disk driven by the floppy disk drive 64 and the program stored thereon is then installed on the hard disk 62.

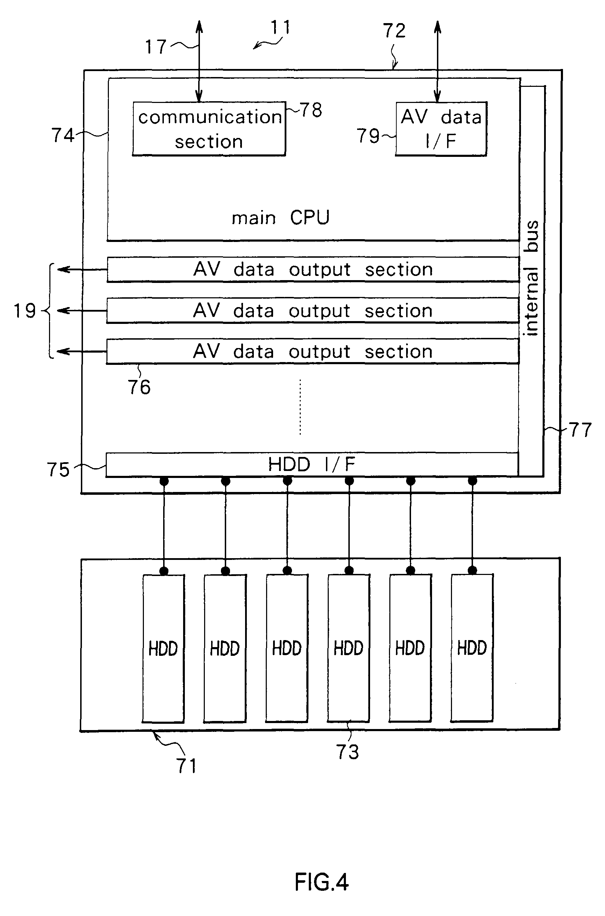

Fig. 4 is a block diagram illustrating an example of the VOD server in Fig. 1. The VOD server 11 shown comprises a storage section 71 and a control section 72. The storage section 71 has a plurality of hard disk drives (HDDs) 73 each for driving a hard disk. AV data to be provided for a client is stored on a hard disk driven by each HDD 73.

The control section 72 has: a main CPU 74; a HDD interface (shown as HDD I/F) 75; AV data output sections 76 for every output channel connected to a separate link 19; and an internal bus 77 for interconnecting the constituents. The HDD interface 75 is connected to the HDDs 73 in the storage section 71. Each AV data output section 76 outputs AV data retrieved from the hard disk in the storage section 71 through the HDD interface 75 to a transmission line 19 in Fig. 1 through a corresponding channel 76. The main CPU 74 has a communication section 78 for communicating with the server computer 12 through the serial transmission line 17 in Fig. 1 and an AV data interface (shown as AV data I/F) 79 for receiving AV data to be stored in the storage section 71 from an encoder not shown. The communication section 78 and the AV data interface 79 are implemented through software. The main CPU 74 receives commands sent from the server computer 12 through the serial transmission line 17 at the communication section 78. In accordance with the commands the main CPU 74 controls the HDD 73 in the storage section 71 for retrieving desired AV data. The retrieved AV data is then outputted through the AV data output section 76 in accordance with the commands.

The operations of the VOD system shown in Fig. 1 will now be described, including operations of the VOD server 11 and the server computer 12 as an apparatus for providing information of the embodiment. The following description serves for a method of providing information of the embodiment and a program for providing information stored in a computer-readable storage medium of the embodiment as well.

As previously mentioned, the HTML file disk 24 in the server computer 12 stores HTML documents including control codes for implementing a user interface using the WWW browser 27. The control codes included in the HTML documents include control codes for controlling the VOD server 11. When a request is made on the client's side for control of the VOD server 11, such as a request for providing information, that is, for replaying AV data, the WWW browser 27 is used for accessing the HTML document including a control code for controlling the VOD server 11. The WWW browser 27 gives a request for controlling the VOD server 11 to the WWW server 21 when control codes for controlling the VOD server 11 are included in an HTML document distributed from the WWW server 21. The control request is sent from the WWW server 21 in the server computer 12 to the server interface 23. The server interface 23 gives an instruction to the server controller 22 for executing control at the control request. On receiving the instruction the server controller 22 gives commands to the VOD server 11 through the serial transmission line 17 to control the VOD server 11.

A specific example will now be given for the control code for controlling the VOD server 11 included in an HTML document. In general, addition of application software to the WWW server 21 allows translation of an HTML document and a database search and so on. Using this function the embodiment of the invention achieves communications with the server controller 22 for controlling the VOD server 11, instead of performing translation of an HTML document and so on. Therefore a general-purpose code is used for the control code added to an HTML document. For example, the following code is used in practice for controlling the VOD server 11 using an HTML document:
〈HTML〉
〈BODY〉
〈A HREF=http://www.addres/script/dll/VSRSI.dll?play?1&/home/play1.html〉 Play Clip 1〈/A〉
〈/BODY〉
〈/HTML〉

In the above code, "Play Clip 1" is indicated on the display 16 on the client's side to which the HTML document is distributed including the above code. If "Play Clip 1" is selected (or clicked, for example) on a frame shown on the display 16 on the client's side, the WWW browser 27 sends the URL address:
"http://www.addres/scrips/dll/VSRSI.dll?play?1&/home/play1.html" in the code to the WWW server 21. "VSRSI.dll?play?1&/home/play1.html" is a command for starting up software implementing the server interface 23. VSRSI is a name of the software implementing the server interface 23. The address and directory of the server where "VSRSI.dll" is located is "http://www.addres/script/dll". The server interface 23 is thus started and operated. In the code "play?1&/home/play1.html" is a parameter for controlling the VOD server 11, such as a number of a clip (an AV program). In the example clip number 1 is designated for replay. Furthermore a homepage ("/home/play1.html") is designated to be displayed during replay of the clip.

The server interface 23 started as described above also sends the Internet address of the client computer 13 having made the request to the server controller 22 in addition to the parameter. The server controller 22 analyzes the parameter and gives a command to the VOD server 11 through the transmission line 17 for controlling the VOD server 11. The server controller 22 designates the output channel corresponding to the Internet address, referring to the table indicating the relationship between the Internet addresses and the output channels. When the server controller 22 gives the VOD server 11 a command for a time-consuming operation such as a replay of an image, the server controller 22 creates a virtual image file (referred to as a virtual image in the following description) in an HTML directory in the HTML file disk 24 under control of the WWW server 21 if the command is correctly received by the VOD server 11. The virtual image indicates that the replay is under way. The server controller 22 informs the client computer 13 of the start of the replay and the termination of the replay request as well. If necessary, commands for switching video signals, such as switching of the switcher 15 and control of an overlay display, are sent to the client computer 13. The virtual image is created for each client.

The server controller 22 periodically detects whether replay is terminated at the VOD server 11 through sensing a status of the VOD server 11. When a 15-minute clip is replayed, for example, intermittent detection is performed for 15 minutes. On detection of termination of replay, the server controller 22 deletes the virtual image. If a viewer requests that the replay be stopped, the server controller 22 controls the VOD server 11 so that the replay is stopped as well as deletes the virtual image.

On receiving the start of replay, the client computer 13 controls switching of video signals, if necessary, in accordance with the command. The client computer 13 then periodically accesses the virtual image in the server computer 12 through the use of the WWW browser 27. When the virtual image is deleted, the client computer 13 determines that the replay is terminated and controls switching of video signals, if necessary, to display a frame provided from the client computer 13 on the display 16.

For allowing periodical access of the client computer 13 to the virtual image, a Java™ applet (Java™ is a trademark of Sun Microsystems, Inc.), a small program written in the Java™ language is used, for example. Specifically, an applet may be included in an HTML document sent from the WWW server 21 to the WWW browser 27 so that the WWW browser 27 calls the applet out of the HTML document for execution. The applet periodically accesses the virtual image and determines that a replay is under way while the virtual image exists. An example of the HTML document including the applet is shown below:
〈HTML〉
〈BODY〉
〈APPLET CODE=ClipSense.classWIDTH=100 HEIGHT=100〉
〈APPLET〉
〈/BODY〉
〈/HTML〉

In the HTML document above, "ClipSense.class" designates the file name of the applet. "WIDTH=100 HEIGHT=100" indicates the area used by the applet.

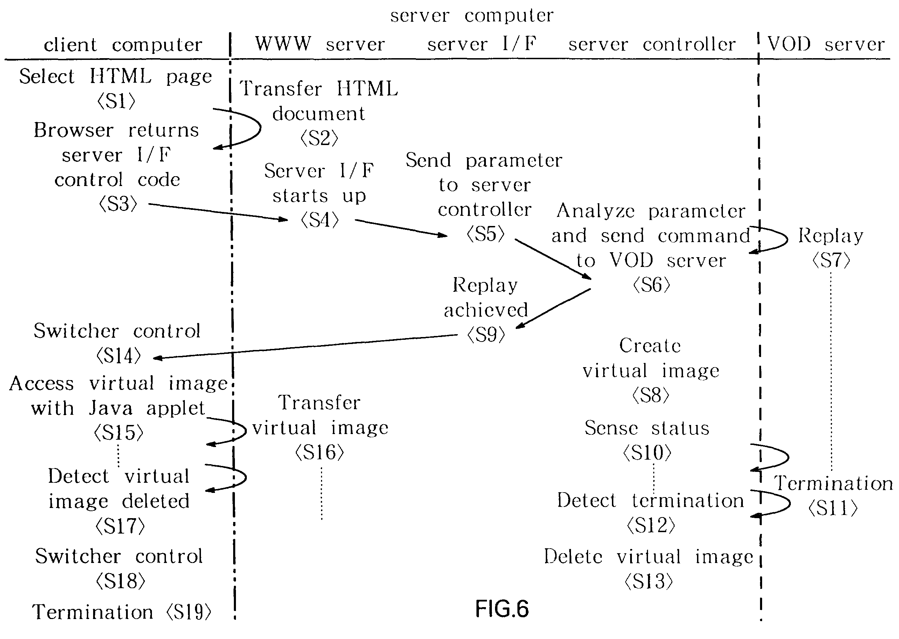

Reference is now made to Fig. 6 for describing a series of operations of the VOD system shown in Fig. 1 when the client computer 13 requests a replay of AV data, as an example. For requesting a replay of AV data on the client's side, a page of an HTML document including a control code for controlling the VOD server 11 is selected through the use of the WWW browser 27 in the client computer 13 (step S1). Consequently, the WWW server 21 in the server computer 12 transfers the HTML document to the WWW browser 27 (step S2). As a result, a frame output from the client computer 13 based on the HTML document is shown on the display 16.

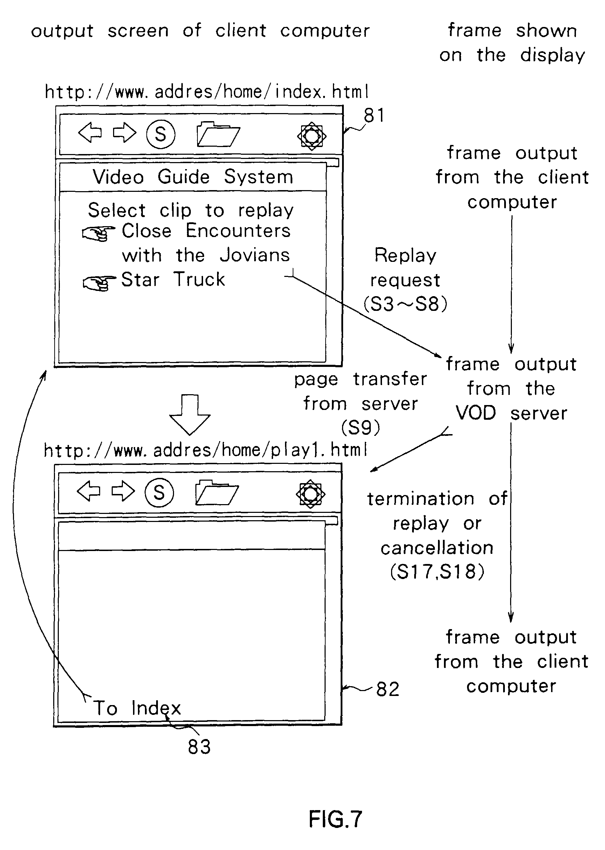

Fig. 7 illustrates a relationship between a frame outputted from the client computer 13 and a frame shown on a display 16. After step S2, a frame output from the client computer 13 is displayed on the display 16, such as the one shown in Fig. 7 with a numeral 81. When an instruction for a replay of AV data is given on the frame based on the HTML document on the client's side, the WWW browser 27 returns to the WWW server 21 a control code for controlling the VOD server 11 in the HTML document distributed from the WWW server 21 (step S3). The control code is specifically for controlling the server interface 23 in the server computer 12. In the example shown in Fig. 7, an instruction for a replay of AV data is made by selecting a part indicating "Close Encounters with the Jovians" or "Star Truck" on the frame 81.

The control request is sent from the WWW server 21 in the server computer 12 to the server interface 23. Consequently the server interface 23 is started (step S4). The server interface 23 having started then passes a parameter for controlling the VOD server 11 to the server controller 22 (step S5). At the same time, the server interface 23 sends the Internet address of the client computer 13 having made the control request to the server controller 22. The server controller 22 analyzes the parameter and gives a command to the VOD server 11 through the transmission line 17 for controlling the VOD server 11 (step S6). The server controller 22 designates the output channel 76 corresponding to the Internet address, referring to the table indicating the relationship between the Internet addresses and the output channels. The VOD server 11 starts a replay following the command (step S7).

If the command is correctly received by the VOD server 11, the server controller 22 creates a virtual image in an HTML directory under control of the WWW server 21 (step S8). The virtual image indicates that the replay is under way. The server controller 22 informs the client computer 13 of the start of the replay and the completion of the replay request by transferring an HTML page to the client computer 13 through the WWW server 21 (step S9). An example of the screen display of the HTML page is shown with numeral 82 in Fig. 7. The Java applet may be inserted in the HTML page, for example. If necessary, the server controller 22 sends commands for switching video signals, such as switching of the switcher 15 and control of an overlay display, to the client computer 13.

The server controller 22 periodically detects whether the replay is terminated at the VOD server 11 through sensing a status of the VOD server 11 (step S10). The replay is terminated at the VOD server 11 (step S11) and the server controller 22 detects the termination of the replay (step S12). The server controller 22 then deletes the virtual image (step S13)

On receiving the start of replay, the client computer 13 controls switching of video signals following the command, if necessary. In a system with the configuration shown in Fig. 1, for example, the switcher 15 is controlled for selecting output data from the VOD server 11 (step S14). As a result, the frame shown on the display 16 is switched to a frame outputted from the VOD server 11 as shown in Fig. 7. A frame indicated with numeral 82 is shown on the display 16 with an operation of a keyboard or a mouse while the frame outputted from the VOD server 11 is displayed on the display 16.

Next, the client computer 13 periodically accesses the virtual image in the server computer 12 by means of a Java applet, for example (step S15). In response to the access, the WWW server 21 in the server computer 12 transfers the virtual image to the client computer 13 (step S16). The client computer 13 detects that the virtual image is deleted (step S17) and then determines that the replay is terminated and controls switching of video signals if necessary. In the system with the configuration shown in Fig. 1, for example, the switcher 15 is controlled for selecting output data of the rate converter 14 (step S18). The operation for replay of AV data thus completes (step S19). As a result, the frame output 82 of the client computer 13 is shown on the display 16 as shown in Fig. 7, for example. An index 83 shown after the termination of replay is included in the frame 82 in the example shown in Fig. 7. The frame returns to the previous page (the frame 81) by selecting the index 83.

As described so far, the server computer 12 receives the request for controlling the VOD server 11 from the client computer 13 through the use of the WWW. In response to the request, the instruction is given to the VOD server 11 for controlling the VOD server 11. As a result, it is no longer necessary on the client's side to create software dedicated to a user interface. Instead, a user interface is created through the use of the WWW browser 27. It is therefore easy to create and customize a user interface conforming to client's demands. For communication between the client's side and the server's side, communication between the WWW server 21 and the WWW browser 27 is used. It is therefore no longer necessary to provide another means of communication.

Currently the market of WWW browsers is rapidly growing while WWW browsers are incorporated in personal computers and home electronic information products. A public recognition of the WWW browser is growing as well. In addition, customization of contents of a browser is easily achieved since an environment for editing contents is enriched and there are many of those who have experience in editing. The embodiment of the invention therefore allows clients to change a user interface relatively easily. In particular the embodiment facilitates changing a user interface at a museum and a small theater and so on as a client of a VOD system where a client-specific user interface is required and the user interface dynamically changes with time and seasons and with an exhibition at a museum and so on.

To be specific, a homepage may be created for controlling the VOD server 11, using the standard HTML. As a result, an actual user receiving information from the VOD server 11 may use the WWW browser 27 operating on the client computer 13 to select a clip on the homepage written in the HTML displayed by the WWW browser 27 and to control the VOD server 11 for replaying video and audio. The clip on the VOD server 11 is seen as a content (a video source) of the WWW browser 27 by the user of the WWW browser 27.

In the embodiment the separable programs implement the software for receiving requests from the client's side through the use of the WWW (the program for implementing the server interface 23) and the software for controlling the VOD server 11 (the program for implementing the server controller 22). As a result, the software programs may be easily diverted to some other system by modifying the hardware-dependent software for controlling the VOD server 11. It is therefore easy to produce the hardware-specific software for controlling the hardware.

The embodiment allows AV data to be sent from the VOD server 11 to the client's side through the transmission line 19 rather than the network 18. The transmission line 19 could be any high bandwidth transmission medium, for example, a coaxial cable, a fiber-optical cable, a microwave or satellite link, or the like. As a result, AV data is transferred at a higher rate without the restriction imposed by the more limited data transfer rate in the network 18.

It takes longer for replaying a clip than reading a text or downloading an image. Consequently, the WWW browser 27 in the client computer 13 is busy while waiting from the time of a request for replay of a clip to its termination, which inhibits other operations using the WWW such as completely moving to another page. The embodiment of the invention provides the virtual image while the VOD server 11 is replaying or sending AV data. The virtual image is accessible from the client's side using the WWW through the network 18 as well as indicates that the VOD server 11 is replaying AV data. The client's side detects whether the replay of the AV data is terminated or not by periodically accessing the virtual image. As a result, the client may perform other operations using the WWW such as completely moving to another page without waiting for the termination of replay of the AV data as well as recognize the termination of replay of the AV data.

The embodiment easily provides appropriate information for a plurality of clients. This is achieved through the table stored in the server computer 12, indicating the relationship between the network address of each of the plurality of client computers 13 connected to the network 18 and the channel of each of the clients. On receiving a request for replay of AV data from the client, the relationship table is referred to for sending AV data to the client having made the replay request through the channel corresponding to the client.

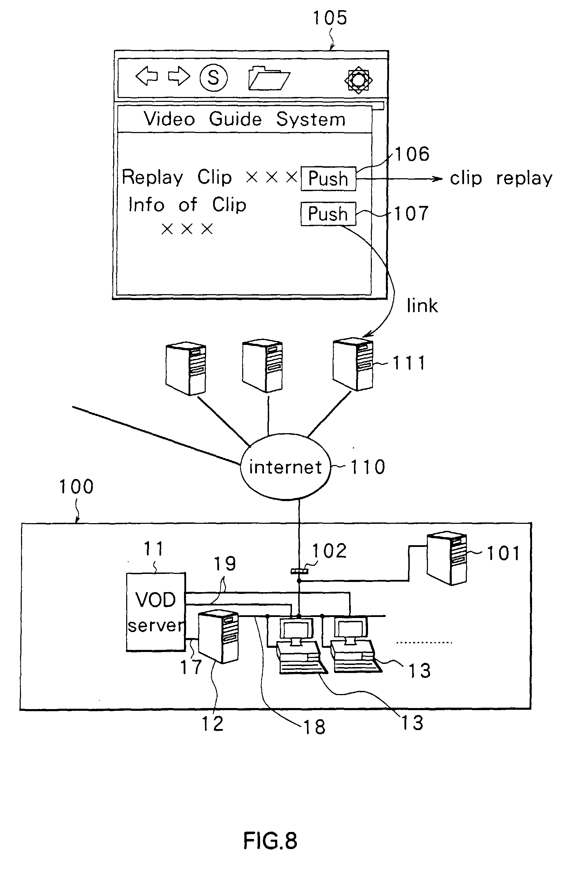

The embodiment further allows a link to external relating information and databases through a client having a connection to the external Internet. Consequently it is easy to obtain information relating to operations of the VOD server 11 such as information relating to a clip being replayed. This feature will now be described in detail with reference to Fig. 8. Fig. 8 illustrates an example of a VOD system 100 utilized in a museum and so on, connected to the external Internet 110. In a similar manner to the configuration shown in Fig. 1, the VOD system 100 in the example comprises a server computer 12 and a plurality of client computers 13 connected through a network 18 and a VOD server 11 controlled by the server computer 12. The VOD system 100 further comprises another WWW server computer 101 connected to the network 18. The network 18 in the VOD system 100 is connected to the external Internet 110 through a network bridge 102. The external Internet 110 is connected to a plurality of WWW server computers 111.

A numeral 105 in Fig. 8 indicates an example of a homepage relating to replay of a clip. The homepage is controlled and distributed by the server computer 12 in the VOD system 100. The homepage includes an item 106 for giving an instruction for replay of a particular clip and an item 107 for giving an instruction for accessing information relating to the clip. If the user selects the item 106, the particular clip is replayed. If the user selects the item 107, the client computer 13 links up with specific one of the WWW server computers 111 connected to the external Internet 110 by means of the WWW browser 27 to receive information relating to the clip managed by the WWW server computer 111.

As described so far, the embodiment allows links to WWW servers throughout the world by the client providing a connection to the external Internet. For example, the user may have an access to information relating to a clip, available in an external source while it is not necessary that the user recognizes its location. The amount of information of the applications of the VOD system is thus increased.

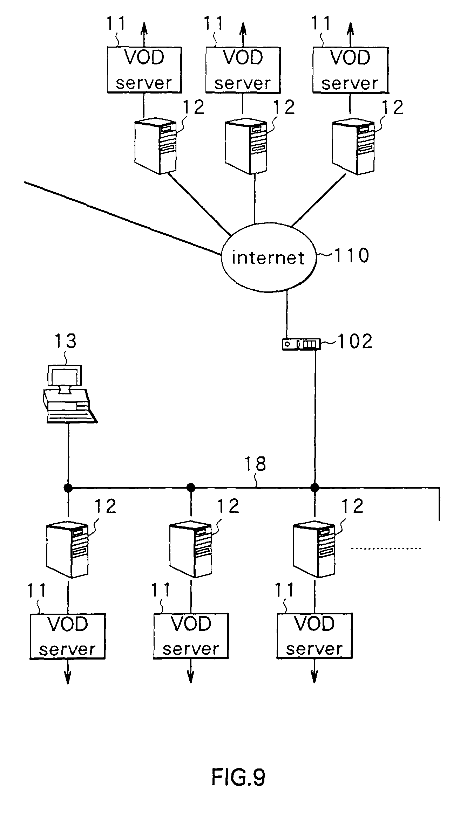

The embodiment further allows the client to control the VOD server 11 in a remote place or a plurality of VOD servers 11 through the Internet. This feature will now be described in detail with reference to Fig. 9. Fig. 9 illustrates an example of one client computer 13 connected to a plurality of server computers 12 for controlling the VOD servers 11. In the example the one client computer 13 and the plurality of server computers 12 are connected to the network 18. The network 18 is connected to the external Internet 110 through a network bridge 102. The external Internet 110 is connected to a plurality of server computers 12. Each of the server computers 12 is connected to a separate VOD server 11 controlled by each of the server computers 12.

In the system shown in Fig. 9, the client computer 13 controls the plurality of VOD servers 11 by giving a control request to the plurality of server computers 12. A particular server computer 12 for controlling its corresponding VOD server 11 is designated with an Internet address. Therefore, once the Internet address of each of the server computers 12 and information of clips stored in the VOD servers 11 are known, the client computer 13 is capable of controlling the server computers 12 and the VOD servers 11 anywhere in the world as long as the server computers 12 are connected to the Internet 110 and an access block for security is released. For example, in order to control the VOD server 11 connected to the server computer 12 with an address of Japan, e.g."www.abc.co.jp", a control code in the HTML may be as follows when a clip number to be replayed is 100:
〈A HREF=http://www.abc.co.jp/scripts/vsrms.dll?play?100&/next/home.html〉100 PLAY〈/A〉

In order to control the VOD server 11 connected to the server computer 12 with an address of the United States, e.g. "www.def.com", a control code in the HTML may be as follows when a clip number to be replayed is 101:
〈A HREF=http://www.def.com/scripts/vsrms.dll?play?101&/next/home.html〉101 PLAY〈/A〉

As described so far, the client computer 13 is capable of controlling the plurality of VOD servers 11. As a result, multi-channel control is achieved such as a multi-screen.

Furthermore, database construction in the client computer 13 is easily performed if a command is provided for capturing a clip stored in the VOD server 11 in a remote place through the Internet. In this case, a command such as list.dll is provided in the server computer 12. A code in the HTML such as the one shown below is included in a homepage distributed by the server computer 12:
〈A HREF=http://www.abc.co.jp/scripts/list.dll〉 LIST OF CLIPS

When the homepage including the code as above in the HTML is accessed from the client computer 13, the command list.dll is executed in the server computer 12 and the server computer 12 returns a text data created from data in the VOD server 11 in a form of an HTML document to the client computer 13.

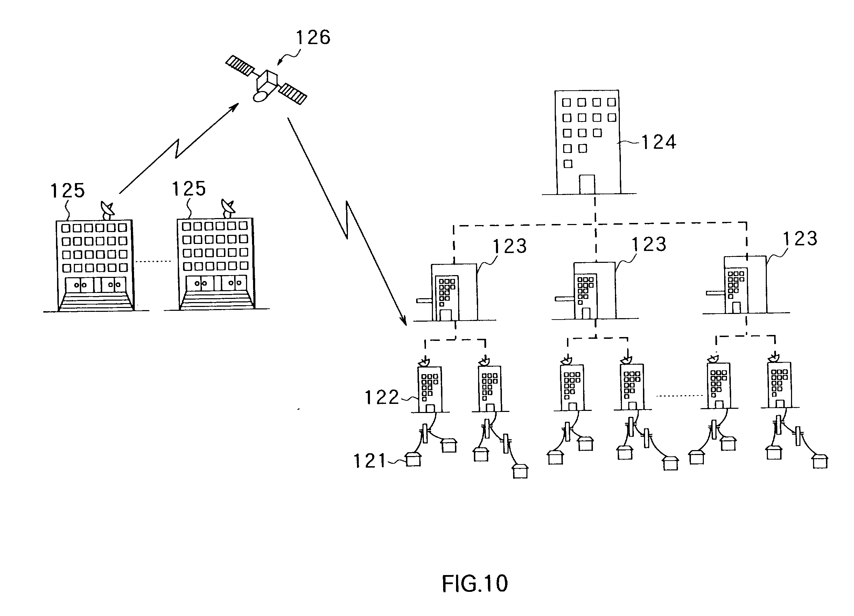

In a similar manner, the status of the VOD server 11 in a remote place may be monitored by supplying a function of making a homepage indicating the status of the VOD server 11 to the WWW server 21 in the server computer 12. The status of the VOD server 11 includes hardware information of the VOD server 11 (the number of effective channels, the number of hard disks, the operational status of each hard disk, the record of failures and self-diagnostic check results) and use information (the number of clips stored and the remaining hard disk space). Such a function is useful for a community antenna television or cable television (CATV) station where the VOD server is used and remote control of the VOD server in an unattended relay station is performed. Fig. 10 illustrates an example of such a CATV system. The CATV system comprises: relay stations 122 for supplying programs to individual households 121; operational stations 123 for controlling the plurality of relay stations 122; a multi-system operational station 124 for controlling the plurality of operational stations 123; and a program sending station 125 for supplying programs to the relay stations 121 via a satellite 126 and the like. The monitoring function mentioned above is useful for such a CATV system with the program sending stations 125 each located in a designated area for supplying programs to each area and performing control by operating the plurality of unattended relay stations 122 from a main station.

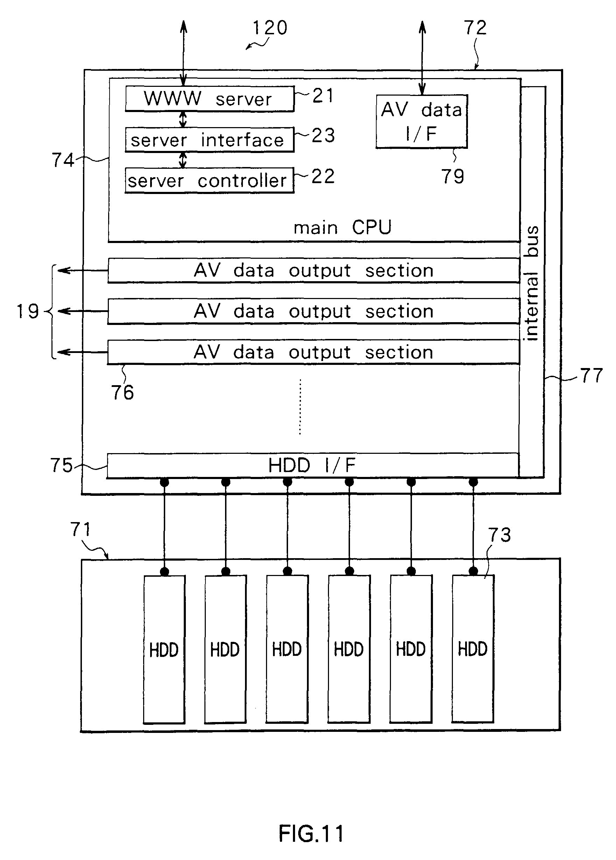

The present invention is not limited to the embodiments described so far wherein the VOD server and the server computer are separated from each other. Alternatively, an integration of the VOD server and the server computer may be achieved by providing the VOD server with a function of the server computer. Fig. 11 is a block diagram showing an example of a VOD server having a function of a server computer. A VOD server 120 shown comprises a storage section 71 and a control section 72. The control section 72 has a main CPU 74; an HDD interface (shown as HDD I/F) 75; AV data output sections 76 for respective output channels; and an internal bus 77 for interconnecting the constituents. The main CPU 74 has a WWW server 121, a server controller 122 and a server interface 123 each having a function similar to that of the WWW server 21, the server controller 22 and the server interface 23, respectively, in the server computer 12 in Fig. 1. The control section 72 has a function similar to that of the HTML file disk 24 in Fig. 1. The control section 72 further has an AV data interface (shown as AV data I/F) 79 for receiving AV data to be stored in the storage section 71 from an encoder not shown. The remainder of the configuration of the VOD server 120 in Fig. 11 is similar to that of the VOD server 11 in Fig. 4. The VOD server 120 shown in Fig. 11 may be provided for allowing a simpler connection on the server's side. As a result, costs may be reduced as well.

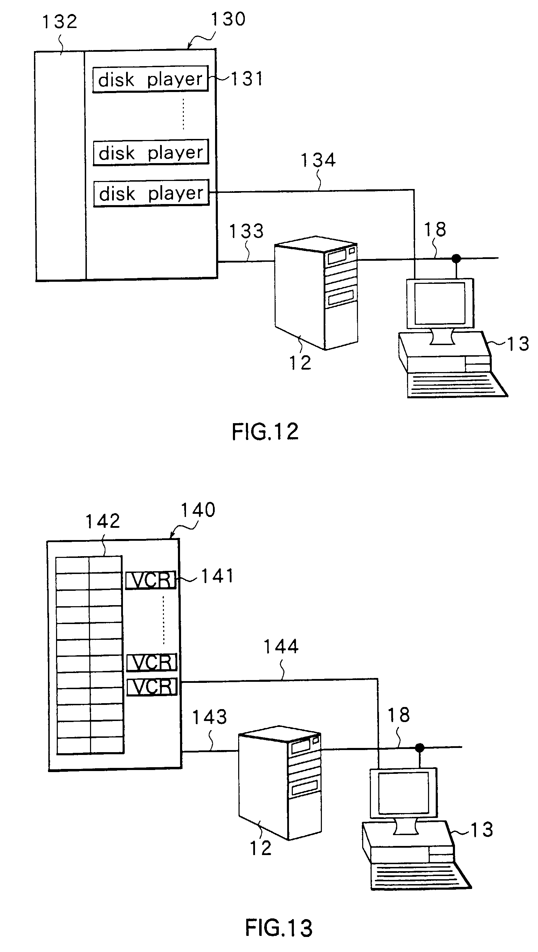

The present invention is not limited to the VOD system described in the foregoing embodiments but may be applied to any other system wherein a specific device provides a specific information on demand of a client. Fig. 12 and Fig. 13 each illustrate an example of a system to which the invention is applicable. Fig. 12 illustrates an example of a configuration of an auto-changer system using disk players wherein the invention is applied. The auto-changer system comprises: a server computer 12 and a client computer 13 connected to each other through an network 18; and a disk cart system 130 controlled by the server computer 12 through a serial transmission line 133. The disk cart system 130 comprises a plurality of disk players 131 each replaying information from an optical disk and a disk changer 132 for placing an optical disk in each of the disk players 131. Information replayed by the disk player 131 is supplied to the client's side through a transmission line 134. In the auto-changer system the server computer 12 controls the disk cart system 130 instead of the VOD server 11 in Fig. 1.

Fig. 13 illustrates an example of a configuration of an auto-changer system using video cassette recorders (VCRs) wherein the invention is applied. The auto-changer system comprises: a server computer 12 and a client computer 13 connected to each other through an network 18; and a VCR cart system 140 controlled by the server computer 12 through a serial transmission line 143. The VCR cart system 140 comprises a plurality of VCRs 141 each replaying information from a video cassette and a changer 142 for placing a video cassette in each of the VCRs 141. Information replayed by the VCR 141 is supplied to the client's side through a transmission line 144. In the auto-changer system the server computer 12 controls the VCR cart system 140 instead of the VOD server 11 in Fig. 1.

While the term HTML has been used throughout this application as the designation for the hypertext markup language preferably to be used, it should be apparent that the invention is not limited to the use of HTML per se and other hypertext languages, as they are developed, may also be suitable. The use of "HTML" as a term in the description and claims is therefore to be construed as encompassing any suitable hypertext language which can be used by a compatible browser.

As described so far, the apparatus for providing information and the method thereof and the computer-readable storage medium retaining a program for providing information all allow receipt of a demand for providing information from a client through the network, using the world wide web. In response to the demand for providing information, information required is sent to the client through a transmission line different from the network. As a result, a user interface is created on the client's side by means of the world wide web browser. It is therefore easy to create and customize a user interface conforming to client's demands. Because the information is sent to the client through the transmission line rather than the network, the information is transferred at a higher rate without the bandwidth restrictions imposed by the lower data transfer rate in the network. Furthermore, the invention allows a link to databases and relating information in an external source by the client providing a connection to the external Internet. It is therefore easy to obtain information relating to the provided information. The invention further allows the client to receive information from an apparatus in a remote place or a plurality of apparatuses through the Internet.

The apparatus for providing information and the method thereof and the computer-readable storage medium retaining a program for providing information may further allow generation of information indicating sending. The information indicating sending indicates that information in demand is being sent and allows access of the client thereto through the network, using the world wide web while the information in demand is being sent. The client is thus allowed to perform another operation using the world wide web without waiting for completion of information being provided. The client is allowed to recognize completion of information being provided as well.

Although the present invention has been shown and described with respect to preferred embodiments, various changes and modifications are deemed to lie within the spirit and scope of the invention as claimed.

## Claims

1. An apparatus for providing information on demand to a client comprising:
a server means for receiving through a network, using a world wide web, a demand from the client to provide information to the client and
a data storage means controlled by the server means for sending the information to the client through a transmission line different from the network in response to the demand from the client received by the server means.

2. An apparatus for providing information according to claim 1 wherein the server means further includes a first means for generating and sending to the client, status information indicating that the demanded information is being sent by the data storage means through the transmission line and simultaneously allowing access by the client thereto through the network, using the world wide web.

3. An apparatus for providing information according to claim 2 wherein the first means further sends a program to the client for allowing the client periodic access to the status information through the network, using the world wide web.

4. A method of providing information on demand to a client comprising steps of:
receiving a demand from a client for providing information through a network, using a world wide web as a system for providing a link to information on a global computer information network and
sending information to the client through a transmission line different from the network in response to the received demand.

5. A method of providing information according to claim 4 further comprising a step of generating status information which indicates that the demanded information is being sent to the client and allows access of by the client thereto through the network, using the world wide web while the demanded information is being sent to the client.

6. A method of providing information according to claim 5 further comprising a step of sending a program for allowing the client periodic access to the status information through the network, using the world wide web.

7. A computer-readable storage medium retaining a program for providing information on demand wherein the program for providing information allows a computer to implement a function of receiving a demand for providing information from a client through a network, using a world wide web as a system for providing a link to information on a global computer information network and a function of sending information to the client through a transmission line different from the network in response to the demand for providing information from the client.

8. A computer-readable storage medium retaining a program for providing information according to claim 7 wherein the program further allows the computer to implement a function of generating status information which indicates that the demanded information is being sent through the function of sending information and allows access by the client thereto through the network, using the world wide web while the information in demand is being sent.

9. A computer-readable storage medium retaining a program for providing information according to claim 8 wherein the program further allows the computer to implement a function of sending a program for allowing the client periodic access to the status information through the network, using the world wide web.

10. An apparatus for providing information on demand to a client comprising:
a network;
a transmission link, separate from the network, for conveying requested information, the transmission link having a higher data transmission rate than the network;
a client station connected to the network and the transmission link, the client station including world wide web (WWW) browser means for sending an information demand via the network;
a server station connected to the network and the transmission link for receiving via the network the information demand from the client station, the server station including a data storage means for sending information specified by the received information demand to the client station through the transmission link.

11. An apparatus for providing information according to claim 10 wherein the network includes the global computer information network.

12. An apparatus for providing information according to claim 10 wherein the global computer information network is the Internet.

13. An apparatus for providing information according to claim 10 wherein the server station further comprises:
a WWW server for receiving, via the network, the information demand from the client station;
a server controller for controlling the data storage means by giving a command to the data storage means;
a server interface for interfacing between the WWW server and the server controller; and
a hypertext markup language (HTML) file storage means accessible by the server controller and the WWW server for storing documents written in HTML.

14. An apparatus for providing information according to claim 13 wherein:
the HTML documents include control codes for implementing a user interface using the WWW browser means at the client station and data storage means control codes for controlling the data storage means;
the WWW server can read out an HTML document from the HTML file storage means, and send the HTML document to the WWW browser via the network;
a client, using the WWW browser, can send an information demand via the network by sending the data storage means control code embodied in the HTML document to the WWW server;
the server interface receives the data storage means control code from WWW server and provides an instruction to the server controller for causing the server controller to command the data storage means to supply particular demanded information to the client station via the transmission link.

15. An apparatus for providing information according to claim 13 further comprising:
a plurality of client stations each having a different network address, wherein the server interface sends the server controller the network address of the client station which sent the information demand;
a plurality of transmission links, each connected between the data storage means and a different client station; and
a data table in the server controller indicating a relationship between each transmission link and the network address of the client station to which that transmission link is connected and the server controller uses the network address supplied by the server interface and the data table to control the data storage means to send the demanded information from the data storage means via a corresponding transmission link to the client station which has sent the information demand.

16. An apparatus for providing information according to claim 15 wherein:
the server controller creates a virtual image file, indicating that information is being sent to the client station, in the HTML file storage means at the time that the server controller controls the data storage means to send the demanded information to the client station and further notifies the client station, via the WWW server and the network, of the beginning and end of the transfer of the demanded information via the transmission link.

17. An apparatus for providing information according to claim 16 wherein the client station further comprises:
a display means;
a client computer, including a parallel input/output controller and the WWW browser;
a rate converter connected to and controlled by the parallel input/output controller for converting video signals outputted from the parallel input/output controller to video signals for display by the display means; and
a switcher controlled by the parallel input/output controller and connected to selectively output to the display means either an output from the parallel input/output controller or the transmission link, the client computer causing the switcher to output to the display means the output from the transmission link in response to notification from the server controller via the WWW server and the network, of the beginning of the transfer of the demanded information via the transmission link and causes the switcher to output to the display means the output from the parallel input/output controller in response to notification from the server controller via the WWW server and the network, of the end of the transfer of the demanded information.

18. An apparatus for providing information according to claim 13 wherein the HTML file storage means stores homepages for one or more client stations.

19. An apparatus for providing information according to claim 10 wherein the client station further comprises:
a display means;
a client computer, including a parallel input/output controller and the WWW browser;
a rate converter connected to and controlled by the parallel input/output controller for converting video signals outputted from the parallel input/output controller to video signals for display by the display means; and
a switcher controlled by the client computer and connected to selectively output to the display means either an output from the parallel input/output controller or the transmission link.

20. An apparatus for providing information according to claim 10 wherein the network includes a global communications network and further comprising:
a plurality of server stations and each server station has a different network address;
a plurality of transmission links, each connected between the data storage means of each server station and one or more client stations.

21. An apparatus for providing information according to claim 10 wherein the data storage means comprises a plurality of optical disk players.

22. An apparatus for providing information according to claim 10 wherein the data storage means comprises a plurality of video cassette players.

23. An apparatus for providing information according to claim 10 wherein the server station further includes a first means for generating and sending to the client station, status information, the status information including information indicating that the demanded information is being sent by the data storage means through the transmission link, and simultaneously allowing access by the client station to the status information through the network, using the world wide web.

24. An apparatus for providing information according to claim 23 wherein the status information includes at least one of information of a number of operationally effective transmission links, a number of hard disks in the data storage means, a record of system failures, self-diagnostic check results, a number of clips of audio/visual information stored by the data storage means, and a remaining hard disk space of the data storage means.

25. An apparatus for providing information according to claim 23 wherein the first means further sends a program to the client for allowing the client periodic access to the status information through the network, using the world wide web.

26. A method for providing information on demand to a client comprising the steps of:
sending an information demand to a server station via a network from a client station connected to the network;
receiving at the server station, via the network, the information demand from the client station and sending information specified by the received information demand to the client station from a data storage means through a transmission link, separate from the network, the transmission link having a higher data transmission rate than the network.

27. A method for providing information according to claim 26 wherein the steps of sending the information demand include sending the information demand via the global computer information network.

28. A method for providing information according to claim 26 wherein the steps performed at the server station further comprise:
receiving at a world wide web (WWW) server, via the network, the demand from the client station to provide information to the client station;
controlling the data storage means, through a server controller connected to the data storage means, by giving a command to the data storage means;
interfacing through a server interface between the WWW server and the server controller; and
storing documents written in a hypertext markup language (HTML) in an HTML file storage means accessible by the server controller and the WWW server.

29. A method for providing information according to claim 28, further comprising the steps of:
embedding in the HTML documents control codes for implementing a user interface using a WWW browser at the client station and data storage means control codes for controlling the data storage means and
reading out an HTML document from the HTML file storage means at the server station using the WWW server and sending it to the WWW browser via the network and receiving a data storage means control code as part of an information demand by the client station;
sending an information demand via the network by using the WWW browser at the server station to send a data storage means control code embodied in the HTML document;
receiving at the server interface at the server station the data storage means control code from WWW server and providing an instruction to the server controller for causing the server controller to command the data storage means to supply particular demanded information to the client station via the transmission link.

30. A method for providing information according to claim 26 wherein there are a plurality of client stations and each client station has a different network address, there are a plurality of transmission links, each connected between the data storage means and a different client station and further comprising the steps at the server station of:
sending the server controller, via the WWW server and the server interface, the network address of the client station sending an information demand;
storing in the server controller a data table indicating a relationship between each transmission link and the network address of the client station to which that transmission link is connected and using the network address supplied by the server interface and the data table to control the data storage means to send demanded information from the data storage means to the client station which has sent the information demand.

31. A method for providing information according to claim 26, further comprising the steps at the server station of:
creating a virtual image file which indicates that information is being sent to the client station;
storing the virtual image file in the HTML file storage means at the time that the data storage means is sending the demanded information to the client station; and
notifying the client station, via server interface, the WWW server and the network, of the beginning and end of the transfer of the demanded information via the transmission link.

32. A method for providing information according to claim 31 further comprising the steps at the client station of:
selectively outputting to a display an output from the transmission link in response to notification from the server controller via the WWW server and the network, of the beginning of the transfer of the demanded information via the transmission link and outputting to the display the output from a parallel input/output controller in response to notification from the server controller via the WWW server and the network, of the end of the transfer of the demanded information via the transmission link.

33. An apparatus for providing information on demand to a client comprising:
a network;
a transmission link, separate from the network, for conveying requested information from one location to another, the transmission link having a higher data transmission rate than the network;
a client station connected to the network, the client station including world wide web (WWW) browser means for sending an information demand via the network;
a server station connected to the network and the transmission link for receiving via the network the information demand from the client station, the server station including a data storage means for sending information specified by the received information demand through the transmission link.
